# DEMANDE DE BREVET EUROPEEN

(11) **EP 1 484 704 A1**
(43) Date de publication de la demande: **08.12.2004**
(21) Numéro de dépôt: 04291263.4
(22) Date de dépôt: 17.05.2004
(51) Int. Cl.: G06F 17/60

(54) **Méthode d'aide à la prise de décision pour la gestion d'un gisement pétrolier en présence de paramètres techniques et économiques incertains**

(30) Priorité: 02.06.2003 FR 0306636
(71) Demandeur: Institut Français du Pétrole, 92852 Rueil-Malmaison Cedex (FR)
(72) Inventeur: Feraille, Mathieu, 92000 Nanterre (FR); Manceau, Emmanuel, 92500 Rueil-Malmaison (FR); Zabalza-Mezghani, Isabelle, 92500 Rueil Malmaison (FR)

(57) **Abrégé**

La méthode peut être mise en oeuvre par exemple dans le domaine de la production pétrolière en vue d'obtenir l'impact des incertitudes techniques et économiques sur la rentabilité économique d'un gisement et/ou pour optimiser la position d'un nouveau puits afin de satisfaire une stratégie de développement.

A l'étape 1, on sélectionne des paramètres techniques incertains ayant une influence sur la production du gisement,

A l'étape 2, on détermine un modèle analytique exprimant la production du gisement au cours du temps en fonction des paramètres sélectionnés à l'étape 1, à partir de valeurs de production obtenues au moyen d'un simulateur d'écoulement,

A l'étape 3, on détermine un modèle exprimant la rentabilité économique du gisement en fonction des paramètres techniques et économiques, à partir du modèle analytique déterminé à l'étape 2.

## Description

### Désignation du domaine technique

La présente invention concerne une méthode pour prendre en compte des incertitudes techniques, en gardant la réalité physique sous jacente et de manière rapide, au sein d'une étude de rentabilité économique d'un gisement pétrolier.

La méthode peut être mise en oeuvre par exemple dans le domaine de la production pétrolière en vue d'obtenir l'impact des incertitudes sur la rentabilité économique d'un gisement et/ou pour optimiser la position d'un nouveau puits afin de satisfaire une stratégie de développement (maximisation de la valeur actuelle nette, ...) en prenant en compte les incertitudes techniques et économiques. De manière générale cette méthode permet de réaliser des études de risque sur la rentabilité économique d'un gisement en prenant en compte des incertitudes techniques et économiques.

### Présentation de l'art antérieur

Selon l'art antérieur, dans l'industrie pétrolière, une étude de rentabilité économique sur un gisement s'appuie généralement sur des profils de production préalablement déterminés. La détermination de plusieurs profils de production pétrolière, c'est à dire l'évolution de la production du gisement au cours du temps, se fait en choisissant plusieurs scénarios possibles, par exemple, très probable, probable et peu probable, liés aux paramètres techniques incertains du gisement. La production d'un gisement au cours du temps est définie par l'évolution de sa production de fluides au cours du temps. Cela peut être par exemple l'évolution au cours du temps de la production d'huile et/ou de gaz et/ou d'eau du gisement. Les scénarios de production pétrolière sont établis à l'aide d'un logiciel de simulation d'écoulement d'un gisement. Ensuite l'étude de rentabilité économique se fait sur les paramètres économiques incertains pour chacun des scénarios. La méthode des scénarios est utilisée de façon à limiter le nombre de simulations d'écoulement, coûteuses en temps de calcul, à faire pour réaliser l'étude de rentabilité économique.

Pour chaque scénario la méthode selon l'art antérieur permet d'obtenir les incertitudes associées à la rentabilité économique du gisement (valeur actuelle nette, taux de rentabilité interne, etc) en définissant des densités de probabilités associées aux paramètres économiques incertains puis en utilisant des méthodes de type Monte-Carlo. Cette méthode permet donc de déterminer l'incertitude sur la rentabilité économique d'un gisement due à des paramètres économiques pour des scénarios de production préalablement déterminés et fixes qui sont fonctions des paramètres techniques incertains liés au gisement.

Cependant les méthodes selon l'art antérieur présentent des insuffisances dues notamment au fait que l'on ne tient pas compte directement et explicitement de l'impact de chaque paramètre technique sur la rentabilité économique du gisement. En effet les paramètres techniques sont pris en compte globalement dans la définition des scénarios de production (établit par simulation numérique d'écoulement), qui englobent l'ensemble des paramètres techniques incertains. Il n'est donc pas possible, par exemple, de quantifier l'impact d'un paramètre incertain technique donné (activité de l'aquifère, porosité, perméabilité, etc) sur la rentabilité économique du gisement ou d'optimiser la position d'un puits afin de maximiser cette rentabilité. D'une manière générale, avec les méthodes selon l'art antérieur, il n'est pas possible de manière rapide et systématique de réaliser des études de risques sur la rentabilité économique d'un gisement en intégrant directement à la fois les paramètres incertains économiques et techniques.

### La méthode selon l'invention

De manière générale, la méthode selon l'invention vise à évaluer la rentabilité économique d'un gisement en prenant en compte des paramètres techniques et économiques inhérents au gisement. La méthode selon l'invention permet de prendre en compte des paramètres incertains techniques, en gardant la réalité physique sous jacente et de manière rapide, en plus des paramètres incertains économiques au sein d'une étude de rentabilité économique.

De manière générale l'invention concerne une méthode pour conduire au mieux l'exploitation d'un gisement d'hydrocarbures modélisé par un simulateur d'écoulement, en tenant compte des implications économiques de paramètres techniques incertains influant sur la production du gisement, dans laquelle on effectue les étapes suivantes :
a) on sélectionne un certain nombre des dits paramètres techniques ;
b) on détermine un premier modèle analytique reliant la production du gisement en fonction du temps, en tenant compte des paramètres sélectionnés à l'étape a) et s'ajustant au mieux sur un certain nombre fini de valeurs de production obtenues par le simulateur de gisement ; cette étape permet de substituer le simulateur d'écoulement coûteux en temps de calcul par un modèle analytique très rapides tout en restant cohérent avec la réalité physique qui lie les incertitudes techniques d'entrée du simulateur numérique aux données de sortie (production, ...) :
c) à partir du premier modèle analytique déterminé à l'étape b), on détermine un deuxième modèle analytique exprimant la rentabilité économique du dit gisement en fonction des paramètres techniques déterminés à l'étape a) et de paramètres économiques choisis, d'où l'on déduit une évaluation d'un critère d'aide à la décision déterminée en tenant compte des incertitudes de production liées aux paramètres techniques incertains ; et
d) on modifie les conditions d'exploitation du gisement sur la base de l'évaluation obtenue du dit critère d'aide à la décision.

A partir du deuxième modèle déterminé à l'étape c), on peut quantifier l'influence relative desdits paramètres et de leurs interactions sur la rentabilité économique du gisement, par exemple, en effectuant une analyse de sensibilité.

A partir du deuxième modèle déterminé à l'étape c), on peut déterminer les incertitudes sur la rentabilité du gisement en fonction des incertitudes sur lesdits paramètres techniques et économiques. Par exemple, on associe une densité de probabilité à chacun desdits paramètres techniques et économiques, puis on utilise une méthode de ré échantillonnage (méthode de Monte Carlo ou de Bootstrap).

A partir du deuxième modèle déterminé à l'étape c), on peut optimiser au moins un desdits paramètres techniques et économiques. Par exemple, on effectue les étapes suivantes : i) on réalise un tirage aléatoire de plusieurs valeurs d'au moins un desdits paramètres intrinsèques au gisement selon sa loi d'incertitude, ii) on détermine les valeurs d'au moins un desdits paramètres liés aux options de développement du gisement de manière à optimiser le critère de production pour chaque valeur tirée à l'étape i) , iii) à partir des valeurs déterminées à l'étape ii) on obtient la distribution optimale desdits paramètres liés aux options de développement du gisement.

A l'étape b), on peut déterminer le premier modèle analytique en utilisant un plan d'expérience, chaque expérience consistant en une simulation du gisement pétrolier effectuée par le simulateur d'écoulement. On peut également déterminer le modèle analytique en utilisant des réseaux de neurones.

A l'étape a), au moins un des paramètres techniques incertains liés au gisement peut être du type discret, continu ou stochastique.

A l'étape d), la modification des conditions d'exploitation peut être relative au forage d'un nouveau puits, à l'emplacement du forage d'un nouveau puits, à l'évolution du schéma de développement, au positionnement des complétions, au type de récupération de fluides.

A l'étape c), le critère d'aide à la décision peut être la rentabilité économique du gisement.

L'utilisation de la méthode selon l'invention permet d'obtenir des modèles économiques liés de façon cohérente avec la physique et de manière rapide aux paramètres techniques incertains. Les études de risques réalisés avec ces modèles fournissent ainsi des résultats plus réalistes et permettant de quantifier l'impact réel de chaque source d'incertitude technique (perméabilité, porosité, position d'un puits, ... ) sur la rentabilité économique du gisement.

### Description détaillée de la méthode

D'autres caractéristiques et avantages de l'invention seront mieux compris et apparaîtront clairement à la lecture de la description faite ci-après en se référant aux dessins parmi lesquels :
- la figure 1 représente schématiquement la méthode selon l'invention,
- la figure 2 correspond à un diagramme de Pareto,
- la figure 3 représente trois histogrammes obtenus via une méthode d'optimisation dans un contexte probable,
- la figure 4 représente un histogramme obtenu via la méthode de Monte Carlo.

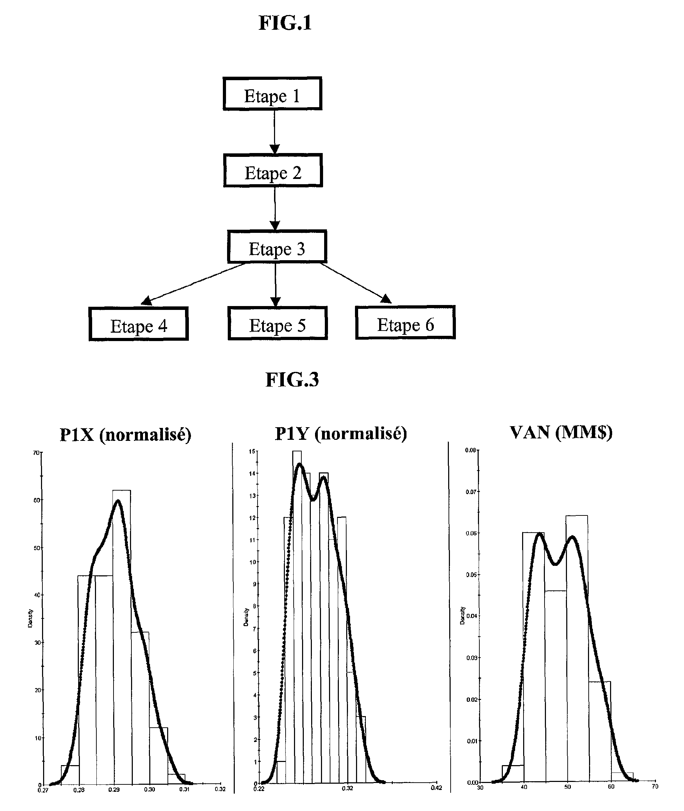

La méthode selon l'invention, décrite en relation avec la figure 1, permet d'évaluer la rentabilité économique d'un gisement en prenant directement en compte ses incertitudes économiques et techniques. A chaque étape de la méthode nous considérons l'exemple d'un gisement pétrolier dont certains paramètres techniques et économiques sont incertains.

### Etape 1 : détermination des paramètres incertains

La première étape de la méthode consiste à sélectionner les paramètres techniques incertains liés au réservoir considéré et à leurs associer un domaine incertain. La sélection des paramètres incertains peut ce faire soit par rapport à la connaissance physique du réservoir soit en menant une étude de sensibilité. Ces paramètres peuvent être de types stochastiques, discrets ou déterministes, il suffit qu'ils interviennent dans le workflow (modélisation géologique, géostatistique, structurale, upscaling, simulation d'écoulement, etc) du modèle d'écoulement du réservoir pour pouvoir être pris en compte.

Un paramètre déterministe est un paramètre continu dont les valeurs sont comprises entre un minimum et un maximum, et qui a un effet continu sur les résultats des simulations de réservoir. Voici quelques exemples de paramètres déterministes classiques:
- les paramètres pétrophysiques comme la porosité et la perméabilité,
- la position, le débit, l'indice de productivité d'un puits ou d'un groupe de puits.

La caractéristique d'un paramètre stochastique est définie par le fait qu'une variation continue a un effet aléatoire sur les résultats des simulations de réservoir, comme le cumulé d'huile à un temps donné. Voici quelques exemples de paramètres stochastiques:
- différents germes géostatistiques permettant d'obtenir différentes réalisations géostatistiques équiprobables,
- différents modèles de réservoir équiprobables et calés sur les données de production,
- différentes cartes structurales du toit ou du mur du réservoir.

L'impact de ce type de paramètre ne peut pas être pris en compte via la théorie classique des plans d'expériences et de méthodologie de surface de réponse. Il est alors préconisé d'utiliser la méthode de modélisation jointe décrite dans les documents suivants :
1. Zabalza-Mezghani, I., "Analyse Statistique et Planification d'expérience en ingénierie de réservoir", IFP Thesis, 24 May 2000.
2. E. Manceau, M. Mezghani, I. Zabalza-Mezghani and F. Roggero, Ifp, "Combination of Experimental Design and Joint Modeling Methods for Quantifying the Risk Associated With Deterministic and Stochastic Uncertainties - An Integrated Test Study", SPE 71620, SPE Annual Technical Conference and Exhibition, New Orleans, Louisiana, 30 September-3 October 2001.
3. M. Feraille, E. Manceau, I. Zabalza-Mezghani, F. Roggero, L-Y. Hu, Ifp, L. Costa Reis, Petrobras, "Integration of dynamic data in a mature oil field réservoir model to reduce the uncertainty on production forecasting", AAPG Annual meeting, Salt Lake City, Utah, 11-14 May 2003.

Les paramètres discrets sont des paramètres qui peuvent prendre un nombre fini de valeurs. Voici quelques exemples de paramètres discrets:
- la complétion d'un puits, perforation des couches 1, 2 et 3 ou seulement 1 et 2,
- la nature d'une faille, perméable ou imperméable.

Pour ce type de paramètre, il est avantageux d'utiliser des plans d'expériences spécifiques tels que ceux définis dans la demande de brevet française EN 02/04109.

Dans notre exemple, le réservoir est constitué par 5 couches poreuses et perméables, numérotées 1 à 5 de haut en bas. Les couches 1, 2, 3 et 5 sont de bonnes qualités tandis que la 4 est de mauvaise qualité en terme de porosités et de perméabilités. On considère comme 1^{er} paramètre déterministe incertain un multiplicateur de perméabilité pour les couches 1, 2, 3 et 5 auquel on associe un minimum et un maximum: MPH1 ∈ [MPH1ₘᵢₙ,MPH1ₘₐₓ]. Le 2^{ème} paramètre déterministe incertain correspond à la force de l'aquifère: AQUI ∈ [AQUIₘᵢₙ,AQUIₘₐₓ]. Le 3^{ème} paramètre déterministe incertain correspond à la saturation d'huile résiduelle après un balayage à l'eau: SORW ∈ [SORWₘᵢₙ,SORWₘₐₓ]. Les 4^{ème} et 5^{ème} paramètres déterministes incertains sont les positions suivant les abscisses et ordonnées du puits P1 en numéro de cellule du modèle de réservoir: P1X ∈ [P1Xₘᵢₙ,P1Xₘₐₓ] et P1Y ∈ [P1Yₘᵢₙ,P1Yₘₐₓ]. Ainsi 5 paramètres incertains déterministes ont été définis. Le domaine incertain est défini dans le tableau 1.

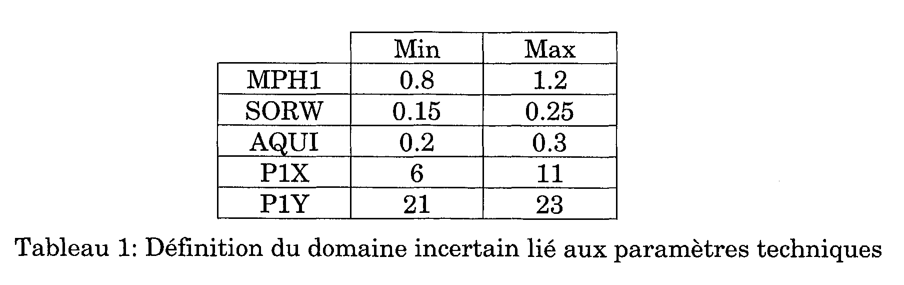

### Etape 2 : approximation du simulateur d'écoulement

Le gisement pétrolier est simulé à l'aide d'un simulateur numérique de réservoir. Le simulateur de réservoir ou simulateur d'écoulement permet notamment de calculer la production, par exemple d'eau, d'huile et/ou de gaz, du gisement dans le temps en fonction de paramètres techniques liés au modèle de réservoir tels que, par exemple, le nombre de couches et de mailles du réservoir, la perméabilité et la porosité des mailles, la force de l'aquifère, des paramètres physiques relatifs aux fluides mis en jeu (études PVT, etc), la position des puits de pétrole et leurs contraintes de production, etc.

On détermine un modèle analytique exprimant la production du gisement au cours du temps, à partir d'un nombre fini de valeurs de production du gisement, les valeurs étant obtenues au moyen du simulateur d'écoulement. Les simulations de production sont réalisées en faisant varier les différents paramètres sélectionnés à l'étape 1. Le modèle analytique peut être déterminé à l'aide de méthodes mathématiques telles que les plans d'expérience, les réseaux de neurones, etc.

Dans le cas où l'on utilise la méthode des plans d'expérience, en fonction des types et du nombre de paramètres incertains déterminés il existe des plans d'expériences adaptés définissant un nombre de simulations numériques à effectuer afin de caractériser de façon rigoureuse et homogène le domaine incertain. Ainsi il est possible d'analyser rapidement et correctement l'influence de chaque paramètre incertain. Il est possible d'utiliser les plans d'expérience décrits par les documents suivants :
4. Dejean, J.P. and Blanc, G., "Managing uncertainties on production prédictions using integrated statistical methods", SPE 56696, SPE Annual Technical Conférence and Exhibition, Houston, USA, oct. 3-6, 1999.
5. Box, G.E.P. and Hunter, J.S., "The 2k-p fractional factorial designs", Part I, Technometrics, 2, 311-352, 1961a
6. Box, G.E.P. and Hunter, J.S., "The 2k-p fractional factorial designs", Part II, Technometrics, 3, 449-458, 1961b
7. Box, G.E.P and Wilson, K.B., "On the experimental attainment of optimum conditions", Journal of the Royal Statistical Society, Series B, 13, 1-45
8. Draper, N. R., "Small composite designs", Technometrics, 27, 173-180, 1985
9. Atkinson, A.C. and Donev, A.N., "Optimum experimental designs", Oxford University press, 1992

Si l'on utilise des plans d'expériences, il est possible à partir des résultats des simulations du plan et en utilisant des modélisations statistiques de lier par une ou plusieurs fonctions analytiques les résultats de simulations, appelés réponses, aux paramètres incertains. Une réponse correspond à un résultat de simulation à un temps donné pour toutes les simulations du plan, par exemple, le cumulé d'huile du réservoir à un temps donné pour les N simulations du plan d'expérience. La forme de la ou des fonctions analytiques dépend du plan d'expérience choisi et du type des paramètres. Par exemple quand un paramètre stochastique et des paramètres déterministes sont définis, la méthode de modélisation jointe, décrite dans les documents [1, 2, 3] précités, peut être utilisée et conduit à la définition de deux fonctions analytiques, la première reproduisant la moyenne et la deuxième la dispersion de la réponse considérée.

L'utilisation des méthodes mathématiques, telles que les plans d'expériences, les réseaux de neurones, et l'utilisation d'outils statistiques adaptés présentent l'avantage de remplacer le simulateur d'écoulement très cher en temps de calcul par une ou plusieurs fonctions analytiques très rapides, valables sur le domaine incertain, permettant de transcrire l'évolution d'une réponse de production en fonction des paramètres incertains. De plus il est important de noter que les fonctions analytiques définies ne dépendent pas de la densité de probabilité des paramètres techniques incertains mais seulement de leurs bornes supérieures et inférieures.

Ainsi il est possible de remplacer par plusieurs fonctions analytiques le profil de production d'un gisement. Il suffit de déterminer les fonctions analytiques donnant la production du gisement en fonction des paramètres techniques, pour chaque année de production. Par exemple, la production cumulée d'huile pour chaque année de production correspond à autant de réponses que d'années à lier avec une ou plusieurs fonctions analytiques.

Dans notre exemple nous allons déterminer des fonctions polynomiales permettant de lier la production cumulée d'huile pour chacune des douze années du profil de production aux cinq paramètres incertains déterministes définis à l'étape 1. Pour ce faire, on choisit un plan d'expériences d'ordre 2 adapté à cinq paramètres déterministes ayant les caractéristiques décrites dans le tableau 2 et permettant de prendre en compte les termes décris dans le tableau 3.

**Tableau 2:**

| Caractéristiques du plan d'expérience | |
|---|---|
| Propriétés du plan | |
| Type de plan | Central Composite - Face Centrée |
| Nombre de paramètres | 5 |
| Nombre de simulations | 27 |

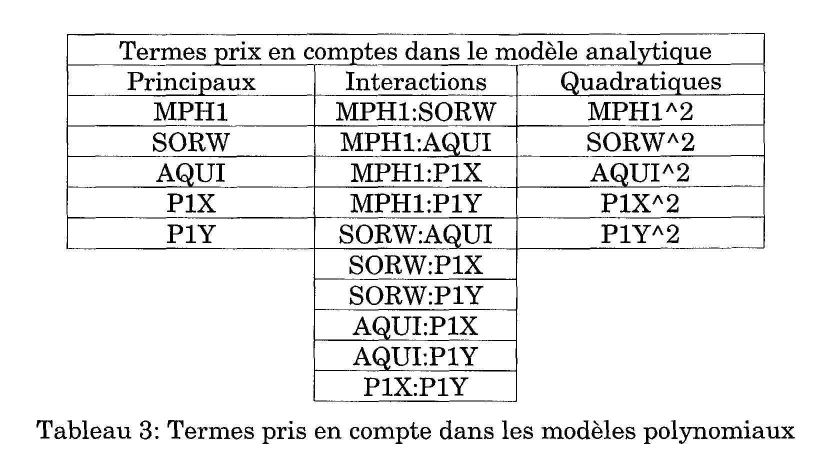

Les vingt-sept simulations correspondantes à celle du plan ont été lancées afin d'obtenir vingt-sept résultats simulés de la production cumulée d'huile pour chaque année du profil de production. A partir de ces résultats, douze modèles polynomiaux sont construits, en utilisant la méthode statistique de surface de réponse, afin d'approcher le simulateur d'écoulement sur le domaine incertain pour les douze années simulées.

### Etape 3 : construction du modèle de rentabilité économique d'un gisement

Le profil de production d'un gisement est défini par le modèle analytique déterminées à l'étape 2. Le simulateur d'écoulement très coûteux en temps de calcul est donc approché par un modèle analytique permettant de lier la production au cours du temps aux paramètres techniques incertains de manière instantanée et tout en gardant la réalité physique sous jacente.

Selon l'invention, le profil de production du gisement ainsi défini peut être utilisé dans une étude économique de façon à pouvoir relier directement et explicitement les incertitudes sur chaque paramètre technique à l'incertitude sur la rentabilité économique du gisement. Ainsi, après avoir défini des paramètres incertains économiques, il devient donc possible d'évaluer et de quantifier l'incertitude sur la rentabilité économique d'un gisement due à la fois à ses paramètres incertains économiques et techniques.

On détermine un modèle qui exprime la rentabilité économique d'un gisement en fonction des paramètres techniques sélectionnés à l'étape 1 et en fonction de paramètres économiques, en utilisant le modèle analytique déterminé à l'étape 2. Par exemple, la rentabilité économique peut être la Valeur Actuelle Net (VAN) du gisement, ou d'autres résultats économiques liés au gisement comme. Les paramètres économiques sont choisis en relation avec la rentabilité économique du gisement, par exemple le coût d'exploitation du gisement, le taux d'actualisation.

Dans notre exemple, deux paramètres économiques incertains ont été définis. Le 1^{er} paramètre économique incertain correspond au coût d'exploitation du gisement en $/bbl auquel on associe un minimum et un maximum: OPEX ∈ [OPEXₘᵢₙ,OPEXₘₐₓ]. Le 2^{ème} paramètre économique incertain correspond au taux d'actualisation: DISCRATE ∈ [DISCRATEₘᵢₙ, DISCRATEₘₐₓ]. Ainsi on obtient au total sept paramètres incertains déterministes dont deux sont techniques, contrôlables et à optimiser (P1X et P1Y), trois sont techniques non-contrôlables (MPH1, AQUI et SORW) et deux sont économiques (OPEX, DISCRATE). Un résumé des paramètres incertains est défini dans le tableau 5.

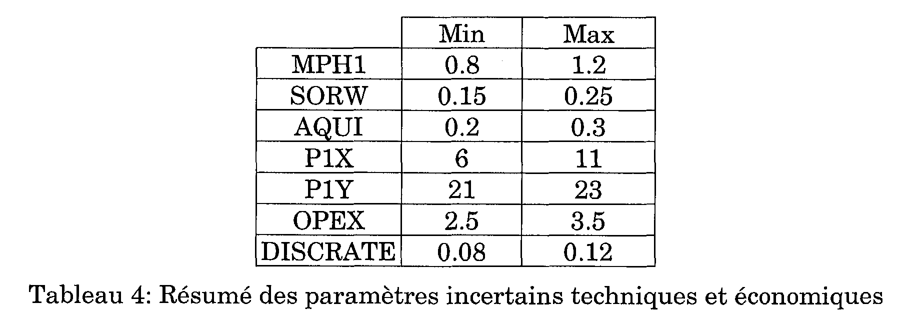

Le modèle économique du gisement, généralement rapide, peut se faire à l'aide d'un logiciel de type tableur, par exemple Excel dans lequel sont utilisées les fonctions polynomiales approchant le profil de production du gisement, déterminées à l'étape 2. Ainsi, on détermine un modèle qui exprime la Valeur Actuelle Net du gisement.

A partir du modèle, déterminé à l'étape 3, qui exprime la rentabilité économique du gisement, on peut effectuer une ou plusieurs des étapes suivantes :
Etape 4 : qualifier chaque paramètre incertain technique et économique ainsi que leurs éventuelles interactions sur la rentabilité économique d'un gisement (en d'autres termes, quantifier l'influence relative des paramètres entre eux) en faisant une étude de sensibilité, par exemple en utilisant des méthodes de plan d'expériences et de méthodologie de surface de réponse, pour construire un diagramme de Pareto, etc.
Etape 5 :déterminer les incertitudes sur la rentabilité économique d'un gisement en fonction des paramètres incertains techniques et économiques en utilisant des méthodes de ré échantillonnages, par exemple en associant à chaque paramètre incertain une densité de probabilité puis en utilisant la méthode de Monte-Carlo, Bootstrap, etc.
Etape 6 :optimiser des paramètres techniques ou économiques incertains mais contrôlables (position, débit d'un puits, négociations contractuelles, ...) dans un contexte déterministe ou probable afin de satisfaire une stratégie de développement (maximisation de la valeur actuelle nette, ... ).

Dans notre exemple, premièrement (étape 4), le modèle de rentabilité économique qui exprime la VAN est utilisé pour qualifier les paramètres incertains techniques et économiques ainsi que leurs interactions sur la Valeur Actuelle Nette (VAN) du gisement. Puis, deuxièmement (étape 6), le modèle est utilisé pour optimiser la position du puits P1 (paramètres P1X et P1Y précédents) de façon à maximiser la VAN du gisement tout en gardant les autres paramètres techniques et économiques incertains. Enfin (étape 5), en gardant fixe la position optimale du puits déterminée nous quantifierons plus précisément les incertitudes dues aux autres paramètres incertains sur la VAN du gisement.

Etude de sensibilité (étape 4): Afin de qualifier les sept paramètres incertains techniques et économiques sur la VAN du gisement, nous avons choisi le plan d'expériences défini dans tableau 7.

**Tableau 7:**

| Caractéristiques du plan d'expérience | |
|---|---|
| Propriétés du plan | |
| Type de plan | Central Composite - Face Centrée |
| Nombre de paramètres | 7 |
| Nombre de simulations | 79 |

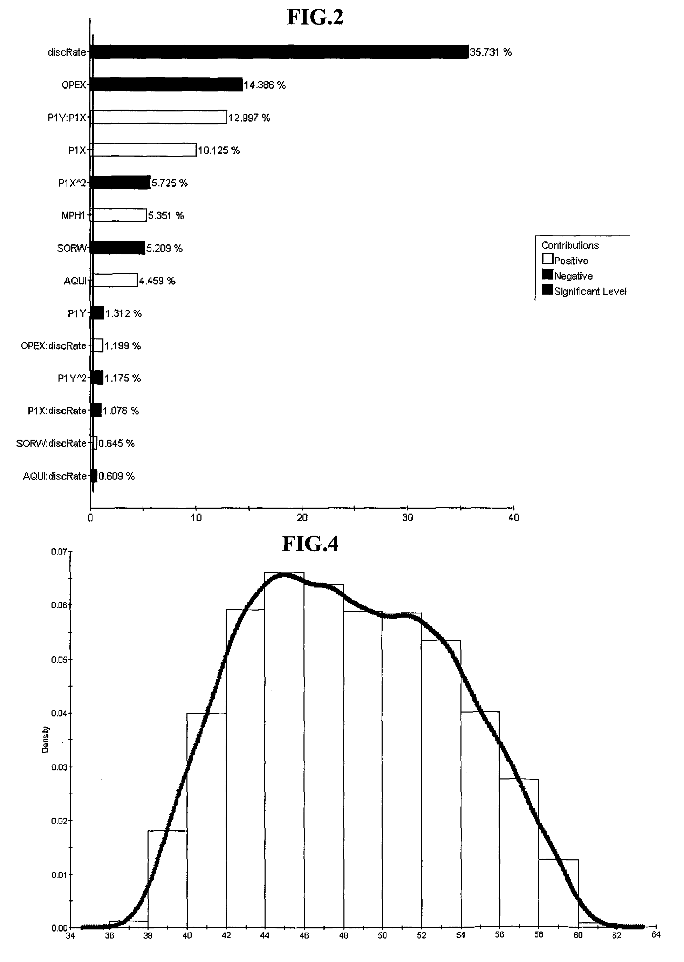

Les expériences correspondantes ont été effectuées en utilisant le modèle de rentabilité économique. A partir des résultats des expériences et en utilisant la modélisation de surface de réponse, un modèle analytique est construit. Ce modèle analytique a ensuite été utilisé de manière à construire un diagramme de Pareto, représenté par la figure 2, utile pour déterminer l'influence de chaque paramètre incertain sur la VAN.

Optimisation du schéma de production (étape 6): Pour optimiser P1X et P1Y afin de maximiser la VAN il est possible soit d'approcher le modèle économique par une fonction analytique en utilisant, par exemple, des méthodes basées sur les plans d'expériences et sur la méthodologie de surface de réponse, soit d'utiliser directement le modèle économique sans l'approcher quand celui ci est assez rapide pour faire les calculs de rentabilité économique. Dans notre exemple le calcul économique très rapide se fait en utilisant directement le modèle de rentabilité économique. L'optimisation des paramètres P1X et P1Y se fait dans un contexte incertain, pour les cinq autres paramètres on associe des densités de probabilité. Dans cet exemple, des lois normales sont utilisées pour les trois paramètres techniques et des lois uniformes pour les deux paramètres économiques. Le tableau 5 résume les densités de probabilité associées à chacun des paramètres.

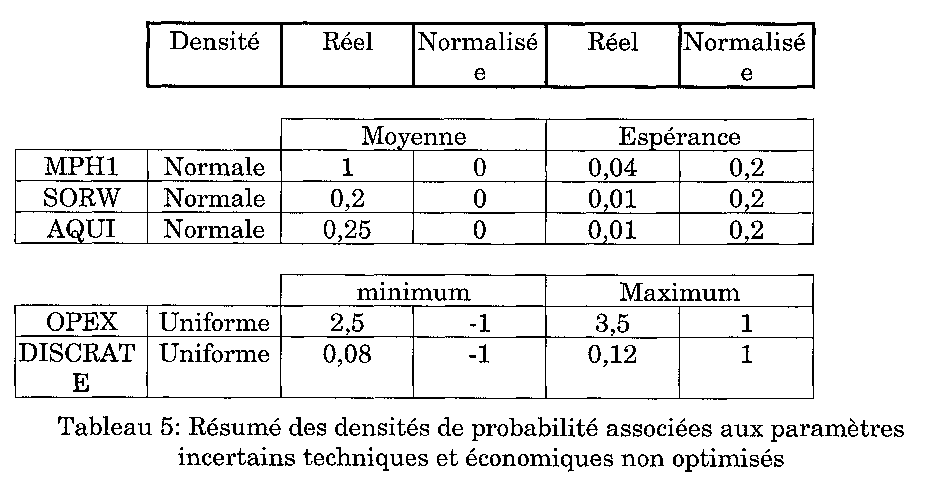

Ensuite en utilisant la méthode de Monte-Carlo, cent points sont tirés pour chacun des cinq paramètres incertains (MPH1, AQUI, SORW, OPEX et DISCRATE) respectant leurs densités de probabilité puis cent optimisations de P1X et P1Y sont faîtes afin de maximiser cent fois la VAN. Les résultats correspondent aux cent valeurs d'optimisation des paramètres P1X, P1Y et de la VAN. De ces cent valeurs des histogrammes sont construits et représentés sur la figure 3. Le tableau 6 résume les valeurs des quantiles.

**Tableau 6:**

| Quantiles P1X, P1Y et de la VAN obtenu via l'optimisation de P1X et P1Y en contexte incertain | | | | | |
|---|---|---|---|---|---|
| Quantile | Optimisation de P1Y (# cellule) | | Optimisation de P1X (# cellule) | | Optimisation de la VAN (106 m3) |
| | Réel | Normalisé | Réel | Normalisé | |
| P100 | 22.248 | 0.248 | 9.196 | 0.279 | 38.746 |
| P90 | 22.256 | 0.256 | 9.207 | 0.283 | 42.007 |
| P80 | 22.264 | 0.264 | 9.212 | 0.285 | 43.494 |
| P70 | 22.271 | 0.271 | 9.218 | 0.287 | 44.898 |
| P60 | 22.278 | 0.278 | 9.221 | 0.289 | 46.666 |
| P50 | 22.286 | 0.286 | 9.227 | 0.291 | 48.698 |
| P40 | 22.294 | 0.294 | 9.231 | 0.292 | 50.722 |
| P30 | 22.3 | 0.3 | 9.234 | 0.293 | 52.008 |
| P20 | 22.31 | 0.31 | 9.241 | 0.296 | 53.724 |
| P10 | 22.318 | 0.318 | 9.248 | 0.299 | 56.407 |
| P0 | 22.337 | 0.337 | 9.263 | 0.305 | 60.237 |

On peut voir que les valeurs optimales de P1X et P1Y sont, dans cet exemple, très peu fonctions des autres paramètres incertains. Les valeurs finales et optimales choisies sont P1X=9 et P1Y=22 puisqu'elles correspondent à des numéros de cellule dans le modèle d'écoulement et donc doivent être entières.

Détermination de la densité de probabilité pour la rentabilité économique (étape 5) : Avec cette valeur optimale de la position du puits P1 un nouvel échantillonnage Monte-Carlo est lancé afin d'obtenir un histogramme et des quantiles plus précis (10000 valeurs) pour la VAN du gisement, représenté par la figure 4.

Nous avons donc pu dans cet exemple optimiser deux paramètres techniques contrôlables correspondants à la position X et Y du puits P1 afin de maximiser la stratégie de développement choisie liée à la rentabilité économique du gisement soit sa VAN puis nous avons quantifié l'impact des autres paramètres incertains techniques et économiques sur la rentabilité économique du gisement sous forme d'histogramme et de quantiles/percentiles.

## Revendications

1. Méthode pour conduire au mieux l'exploitation d'un gisement d'hydrocarbures modélisé par un simulateur d'écoulement, en tenant compte des implications de paramètres techniques incertains influant sur la production du gisement, le simulateur d'écoulement étant construit à partir de données physiques connues en fonction desdits paramètres techniques, dans laquelle on effectue les étapes suivantes :
a) on sélectionne un certain nombre des dits paramètres techniques qui interviennent dans le simulateur d'écoulement;
b) on détermine un premier modèle analytique reliant la production du gisement en fonction du temps, en tenant compte des paramètres sélectionnés à l'étape a) et s'ajustant au mieux sur un certain nombre fini de valeurs de production obtenues par le simulateur de gisement ;
c) à partir du premier modèle analytique déterminé à l'étape b), on détermine un deuxième modèle analytique en fonction des paramètres techniques déterminés à l'étape a) et de paramètres économiques choisis, d'où l'on déduit une évaluation d'un critère d'aide à la décision déterminée en tenant compte des incertitudes de production liées aux paramètres techniques incertains ; et
d) on modifie les conditions d'exploitation du gisement sur la base de l'évaluation obtenue du dit critère d'aide à la décision.

2. Méthode selon la revendication 1, dans laquelle à partir du deuxième modèle déterminé à l'étape c), on quantifie l'influence relative desdits paramètres et de leurs interactions sur la rentabilité économique du gisement.

3. Méthode selon la revendication 2, dans laquelle on effectue une analyse de sensibilité.

4. Méthode selon la revendication 1, dans laquelle à partir du deuxième modèle déterminé à l'étape c), on détermine les incertitudes sur la rentabilité du gisement en fonction des incertitudes sur lesdits paramètres techniques et économiques.

5. Méthode selon la revendication 4, dans laquelle on associe une densité de probabilité à chacun desdits paramètres techniques et économiques, puis on utilise une méthode de ré échantillonnage.

6. Méthode selon la revendication 5 dans laquelle on utilise la méthode de Monte Carlo ou de Bootstrap.

7. Méthode selon la revendication 1, dans laquelle à partir du deuxième modèle déterminé à l'étape c), on optimise au moins un desdits paramètres techniques et économiques.

8. Méthode selon la revendication 7, dans laquelle i) on réalise un tirage aléatoire de plusieurs valeurs d'au moins un desdits paramètres intrinsèques au gisement selon sa loi d'incertitude, ii) on détermine les valeurs d'au moins un desdits paramètres liés aux options de développement du gisement de manière à optimiser le critère de production pour chaque valeur tirée à l'étape i) , iii) à partir des valeurs déterminées à l'étape ii) on obtient la distribution optimale desdits paramètres liés aux options de développement du gisement.

9. Méthode selon l'une des revendications précédentes, dans laquelle à l'étape b), on détermine le premier modèle analytique en utilisant un plan d'expérience, chaque expérience consistant en une simulation du gisement pétrolier effectuée par le simulateur d'écoulement.

10. Méthode selon l'une des revendications 1 à 8, dans laquelle à l'étape b), on détermine le modèle analytique en utilisant des réseaux de neurones.

11. Méthode selon l'une des revendications précédentes, dans laquelle à l'étape a), au moins un des paramètres techniques incertains liés au gisement est du type discret, continu ou stochastique.

12. Méthode selon l'une des revendications précédentes, dans laquelle à l'étape d), la modification des conditions d'exploitation concerne le forage d'un nouveau puits, l'emplacement du forage d'un nouveau puits, l'évolution du schéma de développement, le positionnement des complétions, le type de récupération de fluides.

13. Méthode selon l'une des revendications précédentes, dans laquelle à l'étape c), le critère d'aide à la décision est la rentabilité économique du gisement.
